# EUROPEAN PATENT SPECIFICATION

(11) **EP 3 679 440 B1**
(45) Date of publication and mention of the grant of the patent: **20.07.2022**
(21) Application number: 18717437.0
(22) Date of filing: 20.03.2018
(51) Int. Cl.: G05D 1/02, B60P 1/00, B62D 12/02, B66F 9/06, B66F 9/075, B66F 9/24

(54) **CONVEYANCE SYSTEM, CONVEYANCE DEVICE, AND CONVEYANCE METHOD**
FÖRDERANLAGE, FÖRDERVORRICHTUNG UND FÖRDERVERFAHREN
SYSTÈME DE TRANSPORT, DISPOSITIF DE TRANSPORT, ET PROCÉDÉ DE TRANSPORT

(30) Priority: 08.09.2017 JP 2017173359
(43) Date of publication of application: 15.07.2020
(73) Proprietor: Kabushiki Kaisha Toshiba, Minato-ku Tokyo 105-8001 (JP)
(72) Inventor: ISHII, Gaku, Tokyo 105-8001 (JP); MORIYAMA, Takuro, Tokyo 105-8001 (JP); HAYASHI, Hisashi, Tokyo 105-8001 (JP); IMAHARA, Shuichiro, Tokyo 105-8001 (JP); SAKAMOTO, Yoshiyuki, Tokyo 105-8001 (JP)
(74) Representative: Noble, Nicholas
(86) International application number: PCT/JP2018/010997
(87) International publication number: WO 2019/049404

(56) References cited:
- WO-A1-2016/178613
- WO-A2-2009/040777
- US-A1- 2012 239 224
- US-A1- 2015 125 252
- US-A1- 2017 120 443

## Description

### Technical Field

An embodiment of the present invention relates to a conveyance system, a conveyance device, and a conveyance method.

### Background Art

A factory and a warehouse have a problem of efficiency related to logistics, and solving of shortage of manpower. In order to automate conveyance, the Automated Guided Vehicle (AGV) and the Automated Guided Forklift (AGF) have been introduced (see U.S. Patent No. 9637310). One AGV or AGF conveys one or a plurality of objects to be conveyed such as goods. Therefore, the size and weight of the objects to be conveyed are limited depending on the AGV and AGF.

When an object to be conveyed having large size and weight is conveyed, the AGV and AGF must be increased in size. Increasing the size of the AGV and AGF increases costs required for development and introduction, and conveyable routes are limited. A plurality kinds of AGV and AGF having different sizes may be prepared. However, it increases costs required for introduction and operation.

US2015/125252, according to its abstract, describes a crawler for transporting loads, having a least two chain drive units.

US2017/120443, according to its abstract, describes a moving robot device, for object conveyance using a plurality of moving devices.

WO2016/178613, according to its abstract, describes a method for managing communications for a vehicle, including a ranking for a plurality of communications systems.

US2012/239224, according to its abstract, describes a control system for operating an industrial vehicle, including sending instructions to assist vehicles to avoid obstacles.

WO2009/040777 discloses a system for electing a leader in a robot group including assigning tasks to a group of robots to collect information. A leader is elected by designating each robot as a leader and comparing a criteria related to the collected information between robots of the group to determine a non-leader robot at each comparison until a sole leader is determined by being a remaining robot designated as a leader.

### Summary

The problem to be solved is to provide a conveyance system, a conveyance device, and a conveyance method capable of conveying various objects to be conveyed having different sizes and weights without new costs for development, introduction, and operation.

The invention is defined in the appended claims.

### Brief Description of Drawings

[fig.1]Fig. 1 is a block diagram illustrating a schematic configuration of a conveyance device 1 and a conveyance system according to an embodiment.
[fig.2A]Fig. 2A is a diagram illustrating an example of a cart.
[fig.2B]Fig. 2B is a diagram illustrating a wheel rotated by 90 degrees from Fig. 2A.
[fig.3]Fig. 3 is a perspective view illustrating an example in which four carts convey one object to be conveyed.
[fig.4]Fig. 4 is a flowchart illustrating overall control of the conveyance system according to the present embodiment.
[fig.5]Fig. 5 is a flowchart illustrating a processing procedure in which a function assignment unit determines a cart of which a drive unit is operated.
[fig.6A]Fig. 6A is a diagram illustrating an example in which a wheel in a rear side of a conveyance direction is driven.
[fig.6B]Fig. 6B is a diagram illustrating an example in which a wheel in a front side of the conveyance direction is driven.
[fig.7]Fig. 7 is a flowchart illustrating a processing procedure in which a cart of which a function assignment unit performs communication with a server is determined. [fig.8]Fig. 8 is a diagram explaining conveyance capacity.
[fig.9]Fig. 9 is a flowchart illustrating an example of a processing procedure in which the function assignment unit performs assignment of functions on the basis of loads applied to each cart.
[fig. 10]Fig. 10 is a flowchart illustrating a processing procedure of the function assignment unit of when the conveyance direction of a group of carts changes.
[fig.11]Fig. 11 is a flowchart illustrating a processing procedure of the function assignment unit of when a conveyance distance is long.
[fig.12]Fig. 12 is a flowchart illustrating a processing procedure in which the function assignment unit performs assignment of the functions with consideration of deviation of the conveyance capacity.

### Description of Embodiments

An embodiment will be described below with reference to drawings. For the convenience of easiness of understanding and illustration, description and illustration are made with part of components omitted, changed or simplified in the specification and attached drawings. However, a technical content that is expected to have a similar function is construed as being included in the present embodiment. For the convenience of illustration and easiness of understanding, the reduced scale and the aspect ratio, and the like are changed from the actual object and exaggerated in the drawings attached to the specification.

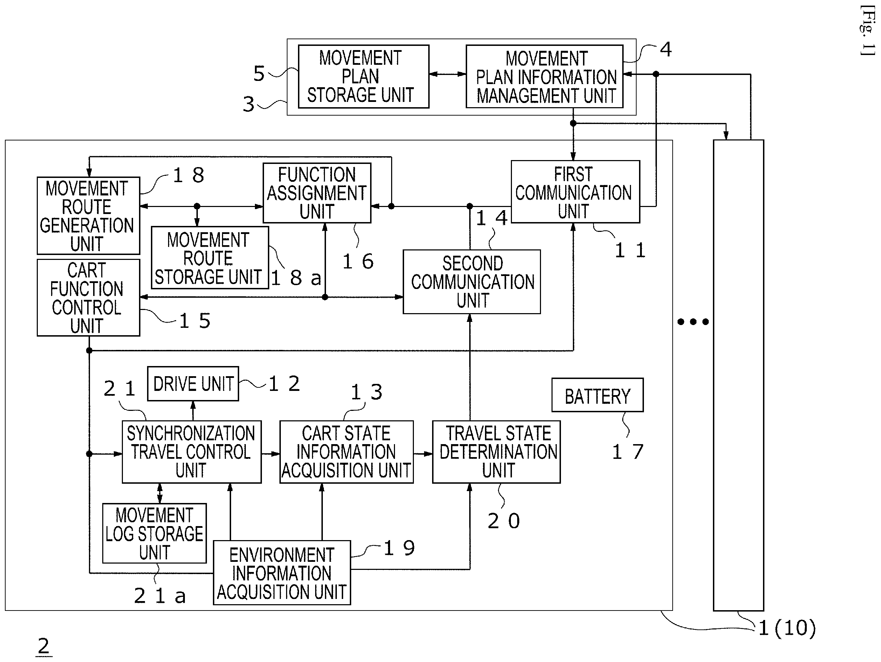

Fig. 1 is a block diagram illustrating a schematic configuration of a conveyance device 1 and a conveyance system 2 according to the present embodiment. The conveyance system 2 of Fig. 1 includes a plurality of conveyance devices 1, and a server 3. Fig. 1 illustrates an example in which the conveyance device 1 is an unmanned conveyance cart. However, the conveyance device 1 only have to be a device capable of conveying an object to be conveyed, and may be, for example, a drone (unmanned aircraft), and a forklift. Hereinafter, an example in which the conveyance device 1 is an unmanned conveyance cart 10 is described, and the conveyance device 1 is simply referred to as a cart 10.

At least one of a plurality of carts 10 performs wireless communication with the server 3. The server 3 includes a movement plan information management unit 4 that manages movement plan information of the plurality of carts 10, and a movement plan storage unit 5 that stores the movement plan information of the plurality of carts 10. The movement plan information management unit 4 includes a communication function of performing wireless communication with at least one cart 10, and transmits the movement plan information to an arbitrary cart 10 as needed. The movement plan information management unit 4 is not necessarily provided in the inside of the server 3. Thus, the server 3 is not an essential component. The movement plan information refers to information of a unit of a group of carts including the plurality of carts 10, particularly, geographical information such as diagrams of arrival and departure points (start point and end point, that is, a destination point), arrival and departure times, a via-point, a passing time, and the like, and positions of each point. In addition, the movement plan information may include information for execution of function assignment of each cart 10, and function assignment such as an assignment technique. The movement plan information may include information on a function executed by each cart 10 when the plurality of carts 10 convey an object to be conveyed to a next point (an end point or the next via-point), information on a timing in which each function of each cart 10 is operated, and the like. When arrival and departure points of an object to be conveyed, and weight and size of the object to be conveyed are given to the movement plan information management unit 4, the movement plan information management unit 4 generates the movement plan information by using these pieces of information.

The movement plan information management unit 4 may receive at least one of movement route information, function assignment information, movement log information, cart state information, environment information, and travel state information from each cart 10, manage these pieces of information as result information of each cart 10, and utilize the result information when next movement plan information is generated. For example, the movement route information may be used for selection of a passing point of when the object to be conveyed is conveyed again from the same start point to the same end point. The cart state information and the travel state information may be used for generation of the movement plan information of when the object to be conveyed is conveyed by the same cart 10 again.

The plurality of carts 10 only have to be two or more. The number of the carts 10 is not especially limited. For the present embodiment, an example in which one or more goods (hereinafter, referred to as an object to be conveyed) are conveyed by the plurality of carts 10, is described. It is assumed that the plurality of carts 10 include the same function, and have the same size. Carts of different types including another configuration and function, other than the plurality of carts 10 having the configuration of Fig. 1, may cooperate with each other to convey one or more objects to be conveyed. However, for simplified description, an example in which a plurality of carts 10 including the configuration of Fig. 1 convey the object to be conveyed, is described below, and an example in which these carts 10 have the same function, and the sizes of the carts 10 are the same will be described below.

Fig. 1 illustrates an internal configuration of one of the plurality of carts 10. The cart 10 illustrated in Fig. 1 includes a first communication unit 11, a drive unit 12, a cart state information acquisition unit (conveyance device state information acquisition unit) 13, a second communication unit 14, a cart function control unit (function control unit) 15, and a function assignment unit 16. Each cart 10 is assumed to be driven by a battery 17. The battery 17 may be a battery cell that accumulates electric energy, and may be a fuel cell that generates energy by a chemical action. Otherwise, the battery 17 may be an energy accumulation device in which mechanical energy is generated as flywheel.

The first communication unit 11 receives the movement plan information from the movement plan information management unit 4. More particularly, the first communication unit 11 receives a radio wave from the movement plan information management unit 4, to acquire the movement plan information. As described above, the first communication unit 11 may transmit at least one of the movement route information, the function assignment information, the movement log information, the cart state information, the environment information, and the travel state information to the movement plan information management unit 4.

The drive unit 12 generates a drive force of a wheel of the cart 10. The drive unit 12 drives the cart 10 by using the energy of the battery 17. The drive unit 12 may be a motor or an engine. When the drive unit 12 is an engine, a fossil fuel such as gasoline and heating oil may be used instead of the battery 17. Otherwise, the drive unit 12 may be a hybrid type drive unit that uses both a motor and an engine.

The cart state information acquisition unit 13 acquires cart state information including at least one of a position, a conveyance direction, a conveyance speed, an output, and a battery residual amount of the cart 10. The battery residual amount is a residual quantity of the battery 17. The cart state information may include various other types of information on the cart 10.

The second communication unit 14 transmits and receives at least the cart state information, the movement plan information, and the function assignment information with the other cart 10 of the plurality of carts 10. More particularly, the second communication unit 14 performs wireless communication with the other cart 10 to transmit and receive various types of information including the cart state information, the movement plan information, and the function assignment information of each other.

The cart function control unit 15 controls execution of an assigned function on the basis of the function assignment information. Even when each cart 10 has a plurality of functions, since the cart executes only the function assigned by the function assignment information, each cart 10 can executes a different function from those of other carts 10.

The function assignment unit 16 performs assignment of the functions to be executed by the plurality of conveyance devices 1 to generate the function assignment information on the basis of the movement plan information and the cart state information. Even when the plurality of carts 10 include the function assignment unit 16, only one cart 10 operates the function assignment unit 16. All the other carts 10 receive the function assignment information generated by the function assignment unit 16 of this one cart 10 via the second communication unit 14, to execute the assigned function.

The functions assigned by the function assignment unit 16 refer to various types of functions included by the carts 10. One of the functions is a function of driving the drive unit 12. When the function assignment unit 16 receives an instruction to execute the function of driving the drive unit 12, the drive unit 12 drives the carts 10. Each cart 10 executes the function assigned by the function assignment unit 16. The function assignment unit 16 can include scheduling information indicating the timing in which the function is executed when the function is assigned to each cart 10, to the function assignment information.

The function assignment unit 16 may assign functions to be executed by a plurality of conveyance devices on the basis of conveyance directions of the plurality of conveyance devices and a positional relationship of the plurality of conveyance devices. The function assignment unit 16 may assign the functions to be executed by the plurality of conveyance devices on the basis of conveyance capacity of each conveyance device that is acquired on the basis of the movement plan information and the conveyance device state information of the plurality of conveyance devices, and an energy consumption amount for each unit time of when the function included by each conveyance device is executed. The function assignment unit 16 may assign the functions to be executed by the plurality of conveyance devices on the basis of reception sensitivity in the first communication unit. The function assignment unit 16 may assign the functions to be executed by the plurality of conveyance devices on the basis of loads applied to the plurality of conveyance devices. The function assignment unit 16 may assign the functions to be executed by the plurality of conveyance devices on the basis of a travel state of forward in the conveyance direction. The function assignment unit 16 may change the assignment of the functions to be executed by the plurality of conveyance devices, at the time of acceleration and deceleration. The function assignment unit 16 may change the assignment of the functions to be executed by the plurality of conveyance devices, depending on whether there is an obstacle in the forward in the conveyance direction.

The movement plan information management unit 4 may have information related to specification and performance of each cart 10 including an energy consumption amount per a unit time of each function of the carts 10, or the function assignment unit 16 of each cart 10 may have the information. This information is utilized as needed in arbitrary processing via the first communication unit 11 and the second communication unit 14.

The cart function control unit 15 performs control of executing the function assigned by the function assignment unit 16, in the carts 10. For example, when the function information assigned by the function assignment unit 16 of the other cart 10 is received via the second communication unit 14, the cart function control unit 15 checks the functions to be executed in the cart 10, to transmit execution control signals to each part in the cart 10, on the basis of the received function information.

Fig. 1 illustrates an example in which the plurality of carts 10 include the function assignment unit 16. However, only part of the carts 10 may include the function assignment unit 16. However, since the present embodiment is characterized in that the carts 10 of which the function assignment units 16 are operated can be changed, it is desirable that the function assignment unit 16 is provided in at least two carts 10. The function assignment unit 16 may be provided in the server 3. Thus, the function assignment unit 16 may be provided in at least one cart 10 and server 3.

In addition, the cart 10 may include at least one of a movement route generation unit 18, an environment information acquisition unit 19, a travel state determination unit 20, and a synchronization travel control unit 21.

The movement route generation unit 18 generates movement routes of the plurality of carts 10 on the basis of the cart state information, the environment information, and the movement plan information. Particularly, the movement route is a locus (way) from a point in the movement plan information to a next point. The cart 10 of which the function assignment unit 16 is operated may operate the movement route generation unit 18 to generate the movement route. That is, when the plurality of carts 10 include the function assignment unit 16 and the movement route generation unit 18, only any one cart 10 may operate the function assignment unit 16 and the movement route generation unit 18. Thereby, the functions can be assigned to each cart 10 after the movement route of each cart 10 is set. For example, when a distance between arrival and departure points is long, the functions of each cart 10 can be changed in the middle of the conveyance. A movement route storage unit 18a that stores the movement route information generated by the movement route generation unit 18 may be provided. The movement route generated by the movement route generation unit 18 is transmitted to the other carts 10 via the second communication unit 14. The processing of the movement route generation unit 18 may be executed not by the cart 10 but by the other device (for example, the server 3) from the cart 10, and the movement route information may be transmitted from the other device via the first communication unit 11 to the cart 10.

The environment information acquisition unit 19 acquires surrounding environment information. For example, the environment information acquisition unit 19 has at least one sensor, and acquires surrounding environment information by the sensor. Particular type of the sensor is not specified. However, one representative example is an imaging sensor. The imaging sensor continuously or intermittently images forward, side, and the like of the cart 10, and checks presence of an obstacle, a slope, or the like in forward, side, and the like of the conveyance direction of the cart 10. A temperature sensor, a humidity sensor, and the like may be provided to acquire surrounding temperature and humidity. The environment information acquisition unit 19 may include a sensor that detects a battery residual amount. The environment information acquisition unit 19 may include a meter for a load applied to the cart 10. When a plurality of carts 10 convey one object to be conveyed, loads applied to the plurality of carts 10 are not necessarily even. Since the largest conveyance load is applied to the cart 10 in which the largest load is applied, the drive force of the drive unit 12 of this cart 10 needs to be large, and the consumption amount of the battery 17 becomes larger. Accordingly, it is important to measure the load applied to the cart 10 by the environment information acquisition unit 19. At least one of the function assignment unit 16 and the movement route generation unit 18 described above may perform the function assignment of each cart 10, and generate the movement route of each cart 10 with consideration of the environment information acquired by the environment information acquisition unit 19.

The travel state determination unit 20 determines a travel state of forward in the conveyance direction. The travel state is, for example, presence of an obstacle, a slope, or the like in forward in the conveyance direction. The travel state determination unit 20, for example, determines the travel state of forward in the conveyance direction on the basis of the environment information acquired by the environment information acquisition unit 19. It is considered that, when the travel state determination unit 20 determines that there is an object that prevents conveyance such as an obstacle and a slope in forward in the conveyance direction, the movement route generation unit 18 resets the movement route. With the resetting of the movement route, the function assignment unit 16 may have to change the assignment of functions of each cart 10. The processing of the travel state determination unit 20 may be executed not by the cart 10 but by the other device (for example, the server 3) than the cart 10, and the determination information of the travel state may be transmitted from the other device via the first communication unit 11 to the cart 10.

The synchronization travel control unit 21 performs control of aligning the conveyance directions of the plurality of carts 10 to cause the carts 10 to synchronously convey. When a plurality of carts 10 convey one object to be conveyed, the plurality of carts 10 must move in the same direction at the same speed. The synchronization travel control unit 21 transmits and receives the information of the conveyance speed and the conveyance direction that is acquired by the cart state information acquisition unit 13, to and from the other carts 10 via the second communication unit 14, to control so that the conveyance speed and the conveyance direction of each cart 10 are the same. The synchronization travel control unit 21 of any one cart 10 of the plurality of carts 10 may initiatively determine the conveyance speed and the conveyance direction, to transmit the determined information to the synchronization travel control unit 21 of the other carts 10 via the second communication unit 14. The synchronization travel control unit 21 refers to a movement log storage unit 21a that stores a movement locus (movement log) of each corresponding cart 10, to perform the synchronization conveyance control of each cart 10.

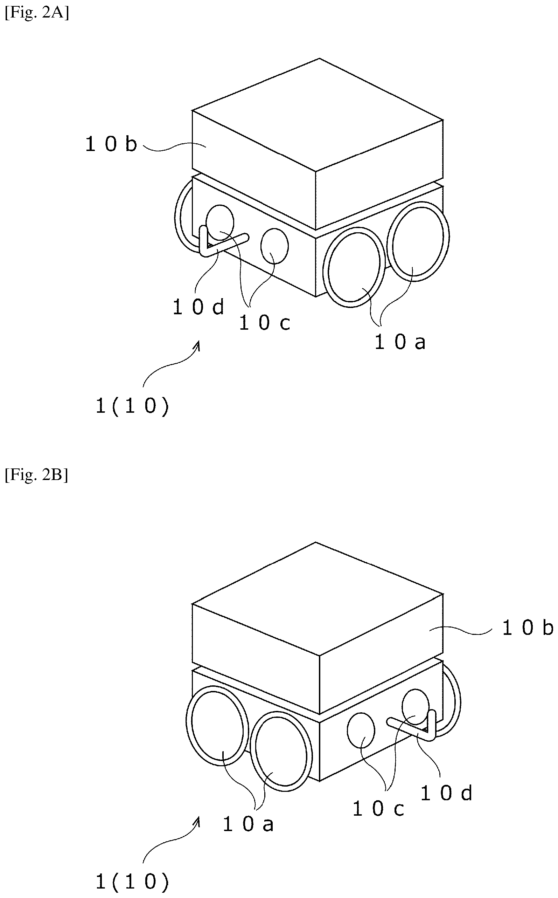

Fig. 2A and Fig. 2B are diagrams illustrating an example of the cart 10. The cart 10 of Fig. 2A and Fig. 2B includes four wheels 10a, and directions of these wheels 10a are rotatable integrally in 360 degrees direction so as to be realized by the Mecanum wheel, or the like. Fig. 2A and Fig. 2B illustrate an example in which the directions of the wheels 10a are rotated by 90 degrees from each other. Thereby, the cart 10 can advance in an arbitrary two dimensional direction. Advancing may be enabled not only forward but also rearward.

A placing unit 10b is provided on the wheel 10a of the cart 10. An upper surface of the placing unit 10b is a flat part. The object to be conveyed is made surface contact with the flat part, and thereby, the object to be conveyed can be stably supported.

For example, an imaging sensor 10c is provided in a front side of the cart 10. The imaging sensor 10c images the front of the conveyance direction of the cart 10. Fig. 2A and Fig. 2B illustrate an example in which two imaging sensors 10c are provided. However, the number and arrangement positions of the imaging sensors 10c are arbitrary. The imaging sensors 10c may be provided in the side and the rearward of the cart 10. Particularly when the cart 10 is enabled to advance rearward, it is desirable that the imaging sensor 10c is provided also in the rear side of the cart 10. In order to enable the prevention of collision with the other carts 10 and search of the alternative route by the cart 10 by itself, it is desirable that the imaging sensor 10c is provided also in the side of the cart 10.

Each component such as the first communication unit 11, the drive unit 12, the cart state information acquisition unit 13, the second communication unit 14, and the function assignment unit 16 described above of the cart 10 are provided in, for example, the inside of the placing unit 10b. An antenna 10d for the first communication unit 11 that performs wireless communication with the server 3 is provided in the cart 10. In addition, an antenna (not illustrated) for the second communication unit 14 that performs wireless communication with the other carts 10 is also provided in the cart 10.

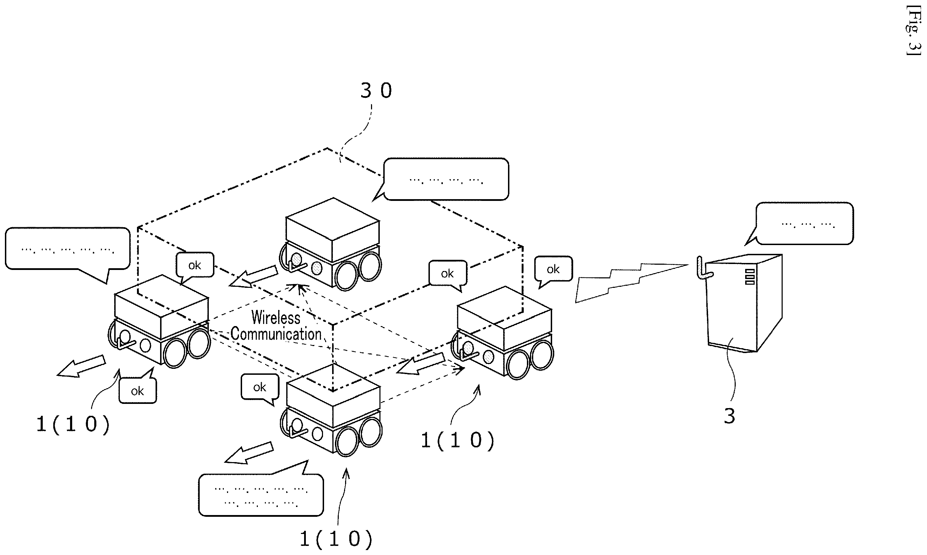

Fig. 3 is a perspective view illustrating an example in which four carts 10 convey one object to be conveyed 30. In an example of Fig. 3, four carts 10 are arranged in four corners of the object to be conveyed 30 that is rectangle. However, it is desirable that the number and positions of the carts 10 serving for the conveyance are set depending on the size, shape, weight, and the like of the object to be conveyed 30. In the group of carts consisting of a plurality of carts conveying the object to be conveyed 30, when the battery residual amount of at least one of the carts 10 is small, this cart 10 may be arranged not in the center side of the group of carts, but in the end side, so that this cart 10 can be easily detached from the group of carts. The number and positions of the plurality of carts 10 that perform conveyance of the object to be conveyed 30 can be set by a mathematical optimization technique, or the like, that handles arrangement layout, task assignment, scheduling, and the like. However, description thereof is not performed in the present embodiment.

As illustrated in Fig. 3, the four carts 10 move in the same conveyance direction at the same conveyance speed. As described above, the loads applied to the four carts 10 are not necessarily stable, and the battery residual amounts of the carts 10 are different. Thus, even when the carts 10 move in the same conveyance direction at the same conveyance speed, control of the drive unit 12 of the carts 10 varies. Since positions of the carts 10 are different, operating states such as a sensor of the carts 10 need to be independently controlled.

For example, only part of the carts 10 in the four carts 10 operates the drive unit 12, and gears of the rest carts 10 may be set to be neutral. Thereby, by the drive force of when the part of the carts 10 operates the drive unit 12, the rest carts 10 can be moved dependently. Hereinafter, setting the gear to be neutral is referred to as dependent operation.

Only part of the carts 10 in the four carts 10 may perform wireless communication with the server 3 via the first communication unit 11. Since the positions of the four carts 10 are different, for example, only the cart 10 having the best reception sensitivity may perform wireless communication with the server 3, to transmit the received information (for example, movement plan information) to the other carts 10 via the second communication unit 14. Wireless communication with the server 3 requires large consuming quantity of the battery 17. On the other hand, in between the carts 10, near field communication that consumes low power is performed, and the consuming quantity of the battery 17 is low. Accordingly, one of the carts 10 representatively performs wireless communication with the server 3, and the rest carts 10 perform near field communication by the second communication unit 14, and thereby, the conveyance system 2 as a whole can perform power-saving communication.

Only part of carts 10 in the four carts 10 may acquire the environment information. For example, only the carts 10 located in forward in the conveyance direction, in the four carts 10, may operate the imaging sensor 10c to image the forward in the conveyance direction. As described above, the environment information includes various information such as temperature. Thus, environment information to be acquired may be varied for each cart 10. In the middle of conveyance, the functions of each cart 10 may be switched according to the instruction from the function assignment unit 16. Thus, for example, while operation of the imaging sensor 10c of the cart 10 having a small battery residual quantity is stopped, the imaging sensor 10c of the cart 10 having a large battery residual quantity may be operated. At this time, when the cart 10 of which the imaging sensor 10c is operated is not located in the forward in the conveyance direction, it is desirable that the wheels 10a of the plurality of carts 10 are synchronized and rotated to change the directions of the group of carts so that the cart 10 of which the imaging sensor 10c is operated is located in forward in the conveyance direction. Not only the imaging sensor 10c, when the function assignment unit 16 changes the assignment of the functions of each cart 10 in the middle of the conveyance, the wheel 10a of the plurality of the carts 10 may be synchronized and rotated in accordance with the positions of each cart 10 that executes each function after the assignment is changed, to change the direction of the group of carts. Rotation control of this wheel 10a is performed in, for example, the synchronization travel control unit 21.

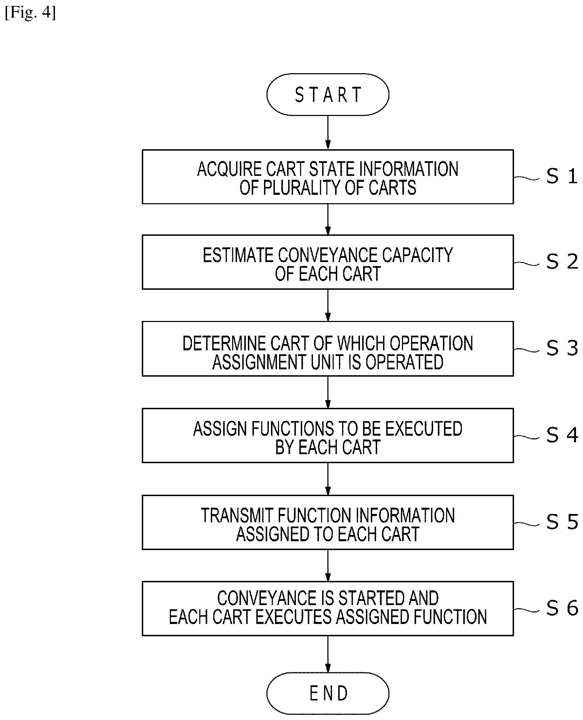

Fig. 4 is a flowchart illustrating overall control of the conveyance system 2 according to the present embodiment. First, the cart state information of the plurality of carts 10 that convey the object to be conveyed 30 is acquired (step S1). Here, the cart state information is acquired for each cart 10, and the acquired cart state information is transmitted to and received from each other via the second communication unit 14. Thereby, each cart 10 can check the cart state information of the other carts 10.

Next, the conveyance capacity of each cart 10 is estimated (step S2). Here, the conveyable distance of each cart 10 is estimated on the basis of the battery residual amount and the load that are acquired by the environment information acquisition unit 19 of each cart 10, and fuel expense (electricity expense in a case of the battery 17) of each cart 10. The estimated conveyable distance is considered as the conveyance capacity. It is desirable that an energy amount per a unit time consumed by each cart 10 is also taken into consideration in estimating of the conveyance capacity. The energy amount per a unit time consumed by each cart 10 depends on the type and the number of the functions executed by each cart 10.

Next, the cart 10 of which the function assignment unit 16 that assigns the functions to be executed by each cart 10 consisting the group of carts is operated, is determined (step S3). At this step S3, the function assignment unit 16 of the cart 10 having the largest battery residual amount and the conveyance capacity may be operated. Otherwise, moving the drive unit 12 consumes the largest energy, for the cart 10. Thus, the function assignment unit 16 of the cart 10 of which drive unit 12 has been stopped, may be operated. Otherwise, the cart 10 of which the function assignment unit 16 is operated may be switched in order, in rotation. Otherwise, the function assignment unit 16 of the cart 10 that responses the fastest may be operated by using a contract net protocol (auction) of a multiagent system.

Next, the function assignment unit 16 of the cart 10 determined at step S3 sets a movement direction (conveyance direction) of the group of carts, and assigns the functions to be executed by each cart 10, on the basis of the position, the conveyance direction, the conveyance capacity, the reception sensitivity, and the like of the group of carts of each cart 10 (step S4). For example, whether the drive unit 12 is operated, may be changed between the cart 10 in the front side of the conveyance direction and the cart 10 in the rear side. For the cart 10 having a conveyance capacity of a predetermined threshold or less, the drive unit 12 may be stopped, and the environment information may not be acquired. The cart 10 having the largest reception sensitivity may execute the function of the first communication unit 11.

Next, the function assignment unit 16 of the cart 10 determined at step S3 transmits the assigned function information via the second communication unit 14 to the other carts 10 (step S5). When each cart 10 receives the function information, conveyance of the object to be conveyed 30 is started, and each cart 10 executes the assigned function (step S6).

It is desirable that the processing of Fig. 4 is repeatedly performed periodically or irregularly. This is because the cart state information such as the battery residual quantity and a surrounding state of each cart 10 changes as time passes. As an event in which the processing of step S1 is irregularly performed, for example, four events (hereinafter, first to fourth events) described below are considered.

A first event is a case where the movement direction (conveyance direction) of the group of carts consisting of a plurality of carts 10 changes for a predetermined threshold or more. When the movement direction of the group of carts significantly changes, for example, the reception sensitivity of the first communication unit 11 of each cart 10 may change. Thus, it is desirable that the cart state information is acquired again.

A second event is a case where it is found that there is an obstacle or the like in the forward in the conveyance direction by the environment information acquired by the environment information acquisition unit 19, and the movement route is changed. In this case, it is desirable that, after the movement route is generated again by the movement route generation unit 18, the processing of Fig. 4 is performed again.

A third event is a starting time of the conveyance system 2 of Fig. 1. At the starting time, the cart 10 of which the function assignment unit 16 is operated may be selected by using a contract net protocol (auction), or the like of a multi agent system via the second communication unit 14, and comparing the conveyance capacity, or the like of each cart 10.

A fourth event is a case where a difference of a predetermined threshold or more is generated in the conveyance capacity of the plurality of carts 10 consisting the group of carts. When the conveyance capacity becomes extremely small, conveyance of the object to be conveyed 30 cannot be performed. Thus, it is desirable that the processing of Fig. 4 is performed again to reset the assignment of the functions of each cart 10.

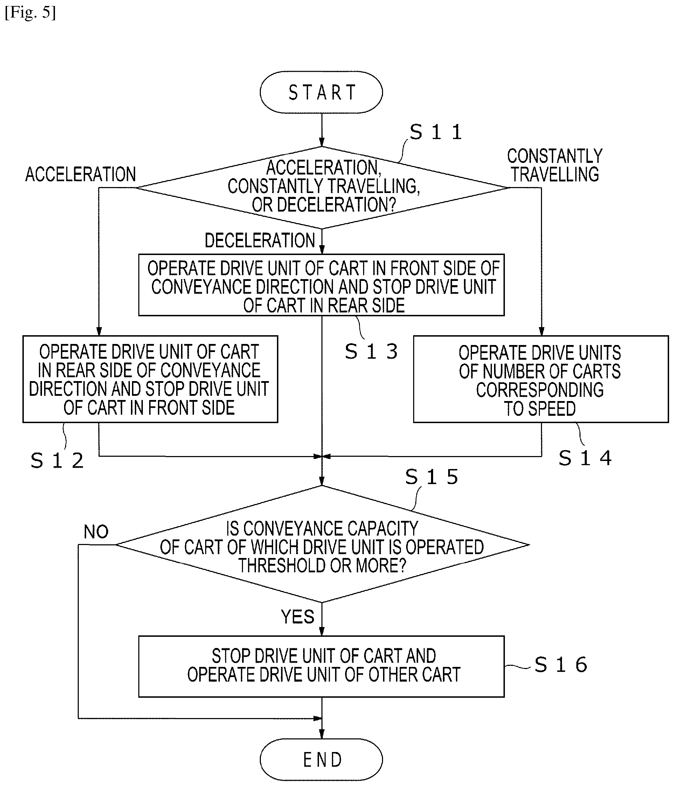

When the object to be conveyed 30 is conveyed by the group of carts, the cart 10 of which the drive unit 12 is operated may be changed depending on whether the group of carts is accelerating, constantly travelling, or decelerating. Fig. 5 is a flowchart illustrating a processing procedure of determining the cart 10 of which the drive unit 12 is operated, by the function assignment unit 16. The function assignment unit 16 performs the processing procedure of Fig. 5 regularly or irregularly not only before the start of conveyance of the group of carts but also during the conveyance.

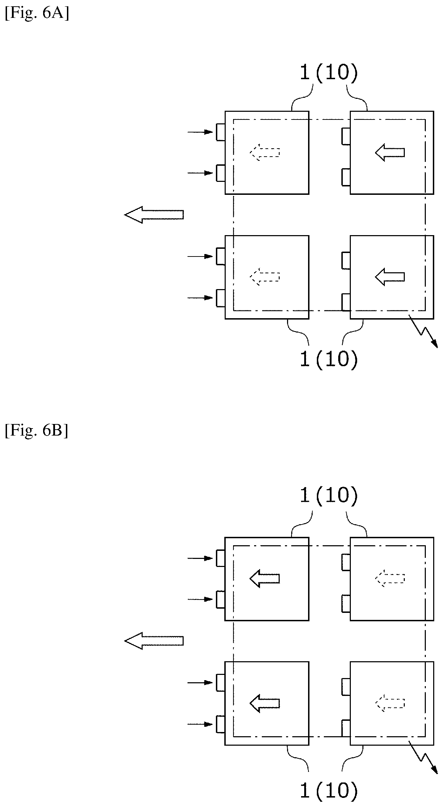

First, whether the group of carts consisting of the four carts 10 is accelerating, constantly travelling, or decelerating is determined (step S11). When it is determined as being accelerating, as illustrated in Fig. 6A, while the drive units 12 of the two carts 10 in the rear side of the conveyance direction are operated, the drive units 12 of the two carts 10 in the front side are stopped, and are caused to be in the dependent operation state (step S12). This is because, when it is accelerating, the load is applied to the rear side, and the object to be conveyed 30 can be efficiently and stably conveyed when the drive force of the cart 10 in the rear side is larger. It is desirable that the drive units 12 of the two carts 10 in the rear side of the conveyance direction are operated as similar to step S12, not only during the accelerating, but also during travelling up a slope. When the acceleration force is desired to be larger, or when the cart 10 travels up a steep slope, the drive units 12 of not only the carts 10 in the rear side of the conveyance direction, but also the two carts 10 in the front side may be operated.

When it is determined as being decelerating at step S11, as illustrated in Fig. 6B, while the drive units 12 of the two carts 10 in the front side of the conveyance direction are operated, the drive units 12 of the two carts 10 in the rear side are stopped, and are caused to be in the dependent operation state (step S13). This is because, when it is decelerating, the load is applied to the front side, and the drive units 12 of the two carts 10 in the front side are operated, and engine braking in the drive units 12 are employed, to improve a braking force. It is desirable that the drive units 12 of the two carts 10 in the front side of the conveyance direction are operated as similar to step S13, not only during the decelerating, but also during travelling down a slope. When braking is performed by the drive unit 12 in the front side of the conveyance direction, the carts 10 may fall forward. Accordingly, when sudden braking is performed, not only the carts 10 in the front side of the conveyance direction, but also the two carts 10 in the rear side may be operated.

When it is determined as being constantly travelling at step S11, the drive units 12 of the number of carts 10 corresponding to the conveyance speed of the group of carts are operated (step S14). For example, when the conveyance speed is low, the number of the carts 10 of which the drive units 12 are operated is made small, and when the conveyance speed is high, the number of the carts 10 of which the drive units 12 are operated is made large.

When the processing of step S12 to S14 ends, whether the conveyance capacity of the carts 10 of which drive units 12 are operated is a predetermined threshold or more is determined (step S15). When there is the conveyance capacity of the threshold or more, the processing of Fig. 5 ends, and when there is the cart 10 having the conveyance capacity of less than the threshold, the drive unit 12 of the cart 10 is stopped and the drive unit 12 of the other cart 10 of which the drive unit 12 is scheduled to be stopped, is operated (step S16).

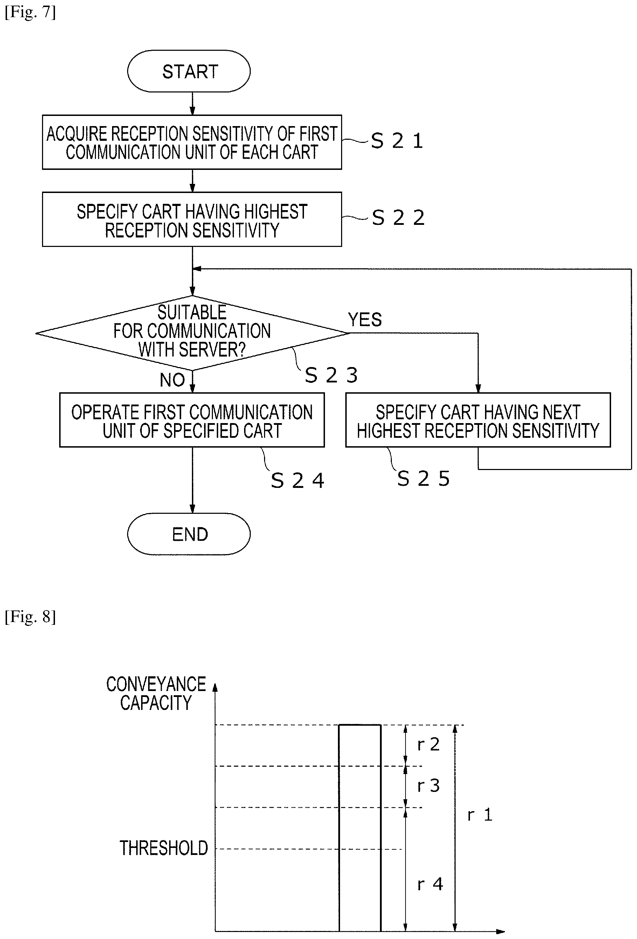

Fig. 7 is a flowchart illustrating a processing procedure in which the cart 10 of which the function assignment unit 16 performs communication with the server 3, is determined. The function assignment unit 16 performs the processing procedure of Fig. 7 regularly or irregularly not only before the start of conveyance of the group of carts but also during the conveyance.

First, the reception sensitivity of the first communication unit 11 of each cart 10 consisting the group of carts is acquired (step S21). The reception sensitivity of the first communication unit 11 of each cart 10 is detected by, for example, the first communication unit 11. The first communication unit 11 of each cart 10 transmits the reception sensitivity information via the second communication unit 14 to the cart 10 of which the function assignment unit 16 is operated.

Next, the reception sensitivity of each cart 10 is compared, and the cart 10 having the largest reception sensitivity is specified (step S22). Next, whether the cart 10 specified at step S22 is suitable for communication with the server 3 is determined on the basis of the conveyance capacity of this cart 10 and an energy consumption amount per a unit time of the function to be assigned to this cart 10 (step S23). When the cart 10 has the conveyance capacity, and the energy consumption amount per a unit time is not so large, it is determined that the cart 10 is suitable for the communication with the server 3, and the first communication unit 11 of the cart 10 specified at step S22 is operated (step S24). On the other hand, when the cart 10 does not have the conveyance capacity, and the energy consumption amount per a unit time is too large, it is determined that the cart 10 is not suitable for the communication with the server 3, and the cart 10 having the second largest reception sensitivity is specified (step S25). Then, the process proceeds to step S23.

Fig. 8 is a diagram explaining the conveyance capacity. The bar graph of Fig. 8 indicates the degree of the conveyance capacity, and an arrow range r1 is conveyance capacity that the cart 10 originally has. An arrow range r2 is a loss amount of the conveyance capacity of when the function already assigned by the function assignment unit 16 is executed. An arrow range r3 is a loss amount of the conveyance capacity of when the first communication unit 11 is operated. The arrow ranges r2 and r3 may be a loss amount per a unit time, may be a loss amount of until the cart 10 reach the next target point or end point, or may be a loss amount per an arbitrary time. The unit time for calculation of the conveyance capacity is arbitrary. The length of the unit time may be set depending on a purpose, usage, or the like of the conveyance. At the step S23 described above, whether a remained r4 obtained by subtracting the arrow ranges r2 and r3 from the arrow range r1 exceeds the predetermined threshold is determined. In the example of Fig. 8, the arrow range r4 exceeds the threshold. Thus, for the conveyance capacity, it is determined that the first communication unit 11 can be operated. The threshold for determination of the conveyance capacity is not necessarily a fixed value, and may be changed depending on the length of the distance to the end point.

When there is no cart 10 having a threshold or more of battery residual amount as a result of repetition of the processing of step S23 and S25 of Fig. 7, it is desirable that, for example, alarm processing such as ringing of an alarm sound is performed to prompt charging or exchanging of the battery 17 of the cart 10.

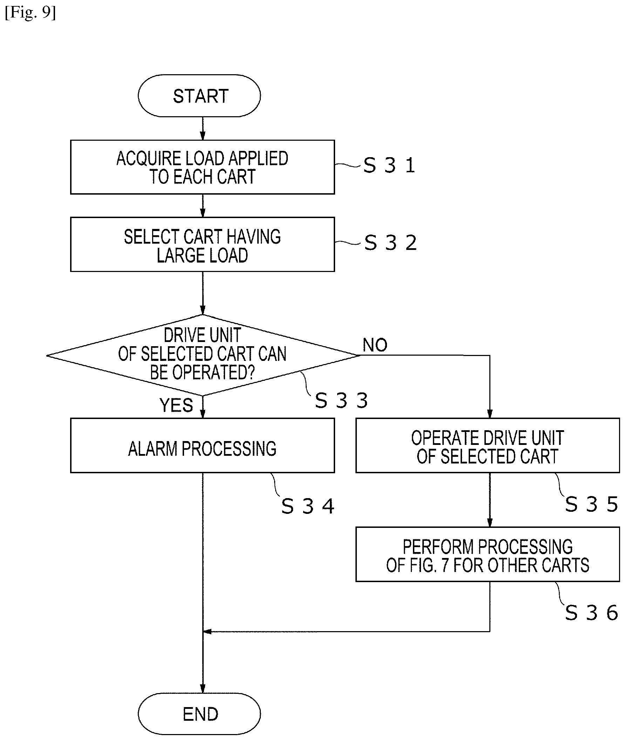

Fig. 9 is a flowchart illustrating an example of the processing procedure in which the function assignment unit 16 performs assignment of the functions on the basis of the load applied to each cart 10. The load applied to each cart 10 varies depending on a state or an inclination angle of a road surface, or the acceleration operation and the deceleration operation of the group of carts. Thus, the function assignment unit 16 performs the processing procedure of Fig. 7 regularly or irregularly not only before the start of conveyance of the group of carts but also during the conveyance.

First, the load applied to each cart 10 consisting the group of carts is acquired via the second communication unit 14 (step S31). The load applied to each cart 10 is, for example, acquired by the environment information acquisition unit 19 of each cart 10. The environment information acquisition unit 19 detects the load by, for example, a load meter.

Next, the function assignment unit 16 compares the load applied to each cart 10 to select the cart 10 having the large load (step S32). More particularly, at step S32, the cart 10 having the largest load is selected, or the plurality of carts 10 are selected in descending order of the load. It is desirable that the drive unit 12 of the cart 10 having the large load is operated. Thus, the cart 10 selected at step S32 is a target of which the drive unit 12 is operated.

Next, whether the drive unit 12 of this cart 10 may be operated is determined on the basis of the conveyance capacity of the cart 10 selected at step S32 (step S33).

When the conveyance capacity is not sufficient (lower than the threshold), alarm processing such as ringing of an alarm sound is performed, and the processing of Fig. 9 ends (step S34). In this case, switching may be performed to the other cart 10 having the conveyance capacity. However, it is desirable that, for the cart 10 applied with the large load, the cart 10 itself is driven. Thus, the alarm processing is performed, and the placing place of the object to be conveyed 30 is shifted so that a large load is not applied to the cart 10 having no conveyance capacity. Otherwise, exchanging of the cart 10 having no conveyance capacity and charging of the battery 17 may be performed.

On the other hand, when the cart 10 has the conveyance capacity (of the threshold or more) at step S33, notification is performed via the second communication unit 14, to the corresponding cart 10 with an instruction of operating the drive unit 12 of the cart 10 selected at step S32 (step S35).

Next, the processing of Fig. 7 is performed to the cart 10 other than the carts 10 selected at step S32, as a target (step S36). Thereby, the cart 10 having as good reception sensitivity as possible of the first communication unit 11 is selected. The reason of excluding the cart 10 selected at step S32 in performing the processing of step S36 is that, since it is considered that the drive unit 12 of the cart 10 having the large load consumes much energy, the communication function is not operated in order to secure the battery residual amount.

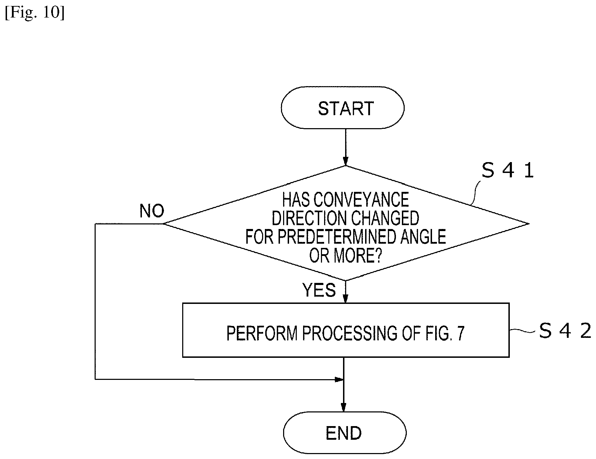

Fig. 10 is a flowchart illustrating the processing procedure of the function assignment unit 16 of when the conveyance direction of the group of carts changes. The processing procedure of Fig. 10 is regularly or irregularly performed during the conveyance of the object to be conveyed 30 by the group of carts.

Whether the conveyance direction of the group of carts has changed for a predetermined angle or more is determined (step S41). The predetermined angle is arbitrary, and is, for example, 45 degrees. The conveyance direction of the group of carts is acquired by the environment information acquisition unit 19 of each cart 10. The environment information acquisition unit 19 detects the conveyance direction by using an acceleration sensor, a direction sensor, and the like.

When the conveyance direction of the group of carts changes for less than a predetermined angle, the processing of Fig. 10 ends. On the other hand, when it is determined that the conveyance direction of the group of carts changes for the predetermined angle or more, the processing of Fig. 7 is performed, and the reception sensitivity of the first communication unit 11 of when each cart 10 performs communication with the server 3 is acquired, to operate the first communication unit 11 of the cart 10 having as good reception sensitivity as possible (step S42).

When it is predicted beforehand that the conveyance direction of the group of carts significantly changes, the wheel 10a of each cart 10 may be rotated in accordance with the conveyance direction after the change to switch the cart 10 of which the drive unit 12 is operated. In accordance to that, the cart 10 of which an imaging camera is operated may be switched.

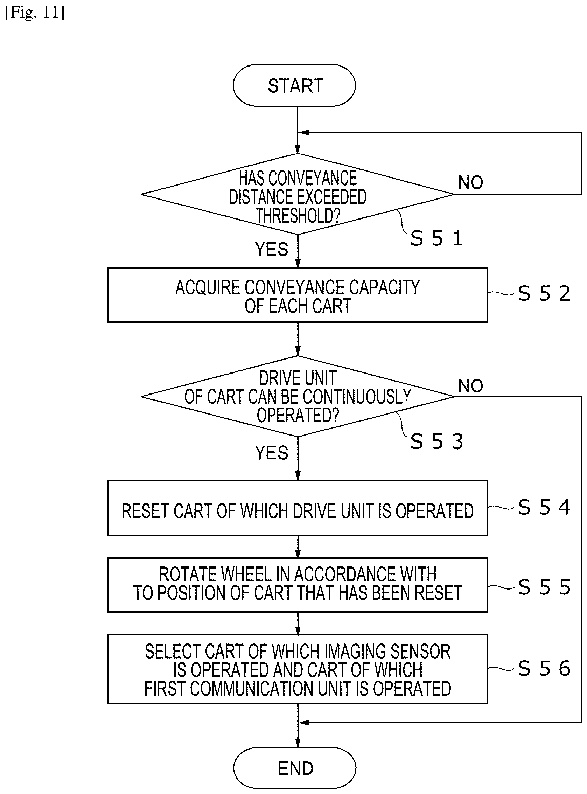

Fig. 11 is a flowchart illustrating a processing procedure of the function assignment unit 16 of when the conveyance direction is long. The processing procedure of Fig. 11 is regularly or irregularly performed during the conveyance of the object to be conveyed 30 by the group of carts.

Whether the conveyance distance exceeds the predetermined threshold is determined (step S51). The processing remains at step S51 with the current function assignment of each cart 10, until the conveyance distance exceeds the threshold. When the conveyance distance exceeds the threshold, the conveyance distance is once set to be zero, the conveyance distance thereafter is measured, and the processing of step S51 is repeatedly performed.

When it is determined that the conveyance distance exceeds the threshold at step S51, the conveyance capacity of each cart 10 is acquired via the second communication unit 14 (step S52). Next, whether the drive unit 12 of this cart 10 may be continuously operated is determined on the basis of the conveyance capacity of the cart 10 of which the drive unit 12 is currently operated and an energy consumption amount per a unit time of the function currently assigned to this cart 10 (step S53). This determination is performed by whether the conveyance capacity is a threshold or more. If the conveyance capacity is the threshold or more, it is determined that the drive unit 12 may be continuously operated. When it is determined that the drive unit 12 may be continuously operated at step S53, the processing of Fig. 11 ends.

On the other hand, when it is determined that the cart 10 does not have the conveyance capacity (of lower than the threshold) at step S53, the cart 10 of which the drive unit 12 is operated is reset (step S54). Next, the wheel 10a of each cart 10 is rotated in accordance with the position of the cart 10 that has reset (step S55). For example, when acceleration is performed, the direction of the group of carts is changed by rotating each wheel 10a in the same rotation direction for the same rotation angle synchronously between the carts 10 so that the cart 10 of which the drive unit 12 is operated is located in the rear side of the conveyance direction.

Next, the cart 10 of which the imaging sensor 10c is operated, and the cart 10 of which the first communication unit 11 is operated are selected (step S56). For example, when the imaging sensor 10c of the cart 10 located in the forward in the conveyance direction is operated, the processing of Fig. 7 may be performed to operate the first communication unit 11 of the cart 10 having as good reception sensitivity as possible of the first communication unit 11 among the other carts 10 than the cart 10 of which drive unit 12 is operated.

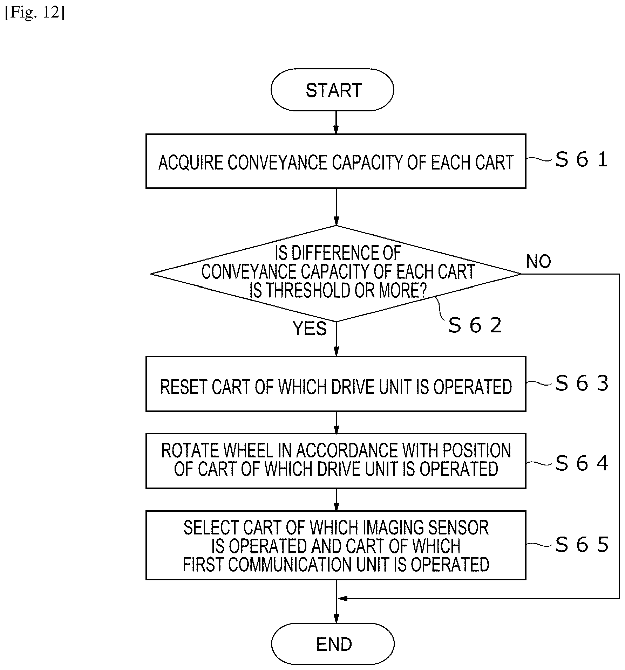

Fig. 12 is a flowchart illustrating a processing procedure in which the function assignment unit 16 performs the assignment of the functions with consideration of deviation of the conveyance capacity. The processing procedure of Fig. 12 is regularly or irregularly performed during the conveyance of the object to be conveyed 30 by the group of carts.

The conveyance capacity of each cart 10 is acquired via the second communication unit 14 (step S61). As described above, the conveyance capacity of each cart 10 is determined on the basis of the battery residual amount and the load of each cart 10, and the travel distance per a unit time of each cart 10. Next, whether the difference of the conveyance capacity of each cart 10 is the predetermined threshold or more is determined (step S62). When it is determined that the difference is less than the predetermined threshold, the current function assignment is maintained, and the processing of Fig. 12 ends.

On the other hand, when it is determined that the difference is the predetermined threshold or more at step S62, the cart 10 of which the drive unit 12 is operated is reset (step S63). Here, for example, the cart 10 having the large conveyance capacity is preferentially selected. Next, the wheel 10a of each cart 10 is rotated in accordance with the position of the cart 10 of which the drive unit 12 is operated (step S64). Here, the direction of the group of carts is changed by rotating each wheel 10a in the same rotation direction for the same rotation angle synchronously between the carts 10.

Next, the cart 10 including the imaging sensor 10c that images the forward in the conveyance direction, and the cart 10 that operates the first communication unit 11 to perform communication with the server 3, are selected (step S65). This step S65 is similar to step S56 of Fig. 11. When the cart 10 of which the first communication unit 11 is operated is selected, a similar processing to Fig. 7 is performed.

The function assignment unit 16 performs each processing illustrated in Fig. 5 to Fig. 12 regularly, irregularly, concurrently, or continuously. The function assignment unit 16 may perform the function assignment processing other than that illustrated in Fig. 5 to Fig. 12.

In the embodiment described above, an example in which at least one of the plurality of carts 10 operates the first communication unit 11 to perform wireless communication with the server 3 has been described. In some cases, all the carts 10 may be hidden by the object to be conveyed, and the wireless communication with the server 3 may not be normally performed. Thus, another cart (hereinafter, referred to as a moving body) that mainly serves to perform the wireless communication with the server 3 may be provided separately from the plurality of carts 10. For example, while moving synchronously with the plurality of carts 10, the moving body may not perform the conveyance of the object to be conveyed. The positional relationship between the plurality of carts 10 are fixed. On the other hand, the moving body may freely move around the plurality of carts 10 in order to search a place with preferable reception sensitivity. The moving body receives the movement plan information from the server 3, and transmits the movement plan information via the second communication unit 14 to an arbitrary cart 10. When there is such moving body, the function assignment unit 16 assigns a communication function with the server 3, preferentially to the moving body. However, in some cases, the moving body may execute a function other than a wireless communication function with the server 3, and for example, may execute the processing of the function assignment unit 16. This moving body may assist the conveyance by contacting with the cart 10 having small conveyance capacity, and for example, pushing the cart 10.

In this way, in the present embodiment, the plurality of carts 10 convey one object to be conveyed 30, the cart 10 of which the function assignment unit 16 is operated is selected from among the carts 10, and the selected function assignment unit 16 assigns the functions of each cart 10. Thus, while the carts 10 share various functions, the object to be conveyed 30 can be conveyed to the target point. The cart 10 of which the function assignment unit 16 is operated is not fixed, and the cart 10 of which the function assignment unit 16 is operated is switched flexibly. Thus, even when part of the carts 10 is in any unanticipated situations such as running down of the battery, the rest carts 10 can perform the conveyance of the object to be conveyed 30 together.

According to the present embodiment, the number and positions of the carts 10 that convey the object to be conveyed 30 can be adjusted depending on the size, weight, shape, and the like of the object to be conveyed 30, and the functions of each cart 10 can be flexibly switched depending on the battery residual amount, the load, and the like. Thus, the plurality of carts 10 having the same function can be effectively utilized. Conventionally, the conveyable size and weight are limited depending on a loading capacity of the cart 10 or a forklift. However, according to the present embodiment, the same type of the plurality of the carts 10 can be arbitrary combined as needed, to convey the object to be conveyed 30. Thus, limitation of the size, weight, and shape of the object to be conveyed 30 is relaxed, and the conveyance work is easy to be performed.

At least part of the functions of the cart 10 described in the embodiment described above may be configured by hardware, and may be configured by software. When the functions are configured by software, a program that realizes at least part of the functions of the cart 10 may be accommodated in a storage medium such as a flexible disc, and a CD-ROM, and a computer mounted on the cart 10 or a computer that performs wireless communication with the cart 10 may read and execute the program. The storage medium is not limited to the one that is attachable and detachable such as a magnetic disc and an optical disc, and may be a fixed-type storage medium such as a hard disc device and a memory. Otherwise, the program may be stored in a semiconductor chip in a form of a microcode, and a controller of the semiconductor chip may execute the microcode. A program that realizes at least part of the functions of the cart 10 may be distributed via a communication line (including wireless communication) such as the Internet. The program may be distributed via a wired line or a wireless line such as the Internet, or stored in a storage medium, in a state of being encrypted, modulated, or compressed.

### Reference Signs List

- 1: Conveyance device
- 2: Conveyance system
- 3: Server
- 4: Movement plan information management unit
- 5: Movement plan storage unit
- 6: Function assignment unit
- 10: Cart
- 11: First communication unit
- 12: Drive unit
- 13: Cart state information acquisition unit
- 14: Second communication unit
- 15: Cart function control unit
- 16: Function assignment unit
- 17: Battery
- 18: Movement route generation unit
- 19: Environment information acquisition unit
- 20: Travel state determination unit
- 21: Synchronization travel control unit

## Claims

1. A conveyance device (1), configured to convey an object with a plurality of conveyance devices (1) including the conveyance device and other one or more
conveyance devices (1), the conveyance device comprising:
a drive unit (12);
a conveyance device state information acquisition unit (13) configured to acquire conveyance device state information of the plurality of conveyance devices including at least one of a position, a conveyance direction, a conveyance speed, and an output, and a residual amount of a battery (17);
a first communication unit (11) configured to perform wireless communication with a server and to receive from the server movement plan information of the plurality of conveyance devices (1);
a second communication unit (14) configured to transmit and receive the conveyance device state information, the movement plan information, and function assignment information to and from the other one or more conveyance devices (1); the conveyance device **characterized by**:
a function assignment unit (16) configured to perform assignment of functions to be executed by the plurality of conveyance devices (1),
and being further configured to generate the function assignment information on the basis of conveyance capacity of one or more of the conveyance devices (1) that is acquired on the basis of the movement plan information and the conveyance device state information of the plurality of conveyance devices (1),
and to perform assignment of the functions to be executed by the plurality of conveyance devices on the basis of reception sensitivity in the first communication unit (11), and an energy consumption amount per unit time of the function to be assigned to one or more of the plurality of conveyance devices (1), wherein the function assignment unit is configured to select one of the plurality of conveyance devices to perform the function of communication with the server.

2. A conveyance system (2) configured to convey an object with a plurality of conveyancing devices, comprising:
a movement plan management unit (4) configured to manage movement plan information of the plurality of conveyance devices;
a conveyance device according to claim 1, wherein the first communication unit (11) is configured to receive the movement plan information from the movement plan management unit (4);
a function control unit (15) configured to control execution of an assigned function on the basis of the function assignment information.

3. The conveyance system (2) according to claim 2, wherein at least one of the plurality of conveyance devices (1) comprises a movement route generation unit (18) configured to generate a movement route of the plurality of conveyance devices (1) on the basis of the conveyance device state information and the movement plan information.

4. The conveyance system (2) according to claim 3, wherein
at least one of the plurality of conveyance devices (1) comprises the function assignment unit (16) and the movement route generation unit,
a first conveyance device of the the plurality of conveyance devices (1) is configured to operate both the function assignment unit (16) and the movement route generation unit, and
the first conveyance device being configured to transmit the function to be executed by other conveyance devices (1) in the plurality of conveyance devices (1), and the movement route, via the second communication unit (14) to the other conveyance devices (1).

5. The conveyance system (2) according to any one of claims 2 to 4, wherein the function assignment unit (16) is configured to assign the functions to be executed by the plurality of conveyance devices (1) on the basis of conveyance directions of the plurality of conveyance devices (1) and a positional relationship between the plurality of conveyance devices (1).

6. The conveyance system (2) according to any one of claims 2 to 4, wherein the function assignment unit (16) is configured to assign functions to be executed by the plurality of conveyance devices (1) on the basis of a load applied to the plurality of conveyance devices (1).

7. The conveyance system (2) according to any one of claims 2 to 6, wherein
at least one of the plurality of conveyance devices (1) comprises a travel state detection unit that is configured to detect a travel state in front of the conveyance device in a conveyance direction, and
the function assignment unit (16) is configured to assign functions to be executed by the plurality of conveyance devices (1) on the basis of the travel state detected by the travel state detection unit.

8. The conveyance system (2) according to any one of claims 2 to 7, wherein the function assignment unit (16) is configured to change assignment of the functions to be executed by the plurality of conveyance devices (1) by whether there is an obstacle in forward in the conveyance direction.

9. The conveyance system (2) according to any one of claims 2 to 8, wherein the function assignment unit (16) is configured to change assignment of the functions to be executed by the plurality of conveyance devices (1) between an acceleration time and a deceleration time.

10. The conveyance system (2) according to any one of claims 2 to 9, wherein
at least one of the plurality of conveyance devices (1) comprises an environment information acquisition unit (19) configured to acquire surrounding environment information, and
the function assignment unit (16) is configured to assign the functions to be executed by the plurality of conveyance devices (1) on the basis of the environment information acquired by the environment information acquisition unit (19).

11. The conveyance system (2) according to claim 10, wherein
the environment information acquisition unit (19) comprises an imaging sensor,
the function assignment unit (16) is configured to generate the function assignment information including stopping operation of the imaging sensor of the conveyance device in which conveyance capacity is lower than a predetermined threshold, and operating of the imaging sensor of the conveyance device of which the conveyance capacity is the predetermined threshold or more.

12. The conveyance system (2) according to any one of claims 2 to 11, wherein one or more of the plurality of conveyance devices (1) comprises a synchronization travel control unit (21) configured to align conveyance directions and causes synchronized conveyance.

13. The conveyance system (2) according to claim 12, wherein when the function assignment unit (16) is configured to perform assignment change of the functions to be executed by the plurality of conveyance devices (1), the synchronization travel control unit is configured to rotate the plurality of conveyance devices (1) integrally in accordance with positions of the conveyance devices (1) that execute the functions after the assignment change.

14. A conveyance method of conveying an object with a plurality of conveyance devices (1), the conveyance method comprising:
managing movement plan information of the plurality of conveyance devices (1); and
receiving, from a server the movement plan information by at least one of the plurality of conveyance devices (1) communicating wirelessly with the server via a first communication unit (11),
wherein one or more of the plurality of conveyance devices (1) is configured to:
acquire conveyance device state information of the plurality of conveyance devices including at least one of a position, a direction, a conveyance speed, and an output, and a residual amount of a battery, and
transmit and receive the conveyance device state information, the movement plan information, and function assignment information to and from the other conveyance device of the plurality of conveyance devices (1),
the method **characterized by**
at least one of the plurality of conveyance devices (1) performing assignment of functions to be executed by the plurality of conveyance devices (1), and being further configured to
generate the function assignment information on the basis of conveyance capacity of one or more of the conveyance devices (1) that is acquired on the basis of the movement plan information and the conveyance device state information of the plurality of conveyance devices (1), and
perform assignment of the functions to be executed by the plurality of conveyance devices on the basis of reception sensitivity in the first communication unit (11), and an energy consumption amount per a unit time of the function to be assigned to one or more of the plurality of conveyance devices (1),
wherein the function assignment comprises selecting one of the plurality of conveyance devices to perform the function of communication with the server.

## Patentansprüche

1. Fördervorrichtung (1), konfiguriert, ein Objekt mit einer Vielzahl von Fördervorrichtungen (1) zu fördern, welche die Fördervorrichtung und andere eine oder mehrere Fördervorrichtungen (1) beinhalten, wobei die Fördervorrichtung umfasst:
eine Antriebseinheit (12);
eine Fördervorrichtungs-Zustandsinformations-Erfassungseinheit (13), die konfiguriert ist, Fördervorrichtungs-Zustandsinformation der Vielzahl von Fördervorrichtungen zu erfassen, welche eine Position, eine Förderrichtung, eine Fördergeschwindigkeit oder/und eine Ausgabe, sowie eine Restmenge einer Batterie (17) beinhalten;
eine erste Kommunikationseinheit (11), die konfiguriert ist, eine Drahtloskommunikation mit einem Server durchzuführen und aus dem Server Bewegungsplan-Information der Vielzahl von Fördervorrichtungen (1) zu empfangen;
eine zweite Kommunikationseinheit (14), die konfiguriert ist, die Fördervorrichtungs-Zustandsinformation, die Bewegungsplan-Information und Funktionszuweisungs-Information an und aus der anderen der einen oder mehreren Fördervorrichtungen (1) zu senden und zu empfangen; wobei die Fördervorrichtung **gekennzeichnet ist durch**:
eine Funktionszuweisungseinheit (16), die konfiguriert ist, die Zuweisung von **durch** die Vielzahl von Fördervorrichtungen (1) auszuführenden Funktionen durchzuführen,
und weiter konfiguriert ist, die Funktionszuweisungs-Information auf Basis von Förderkapazität von einer oder mehrerer der Fördervorrichtungen (1) zu erzeugen, die auf Basis der Bewegungsplan-Information und der Fördervorrichtungs-Zustandsinformation der Vielzahl von Fördervorrichtungen (1) erfasst wird,
und die Zuweisung der **durch** die Vielzahl von Fördervorrichtungen auszuführenden Funktionen auf Basis von Empfangs-Sensitivität in der ersten Kommunikationseinheit (11) und einem Energieverbrauchsbetrag pro Einheitszeit einer oder mehreren der Vielzahl von Fördervorrichtungen (1) zuzuweisenden Funktion durchzuführen, wobei die FunktionsZuweisungseinheit konfiguriert ist, eine der Vielzahl von Fördervorrichtungen auszuwählen, um die Funktion der Kommunikation mit dem Server durchzuführen.

2. Fördersystem (2), das konfiguriert ist, ein Objekt mit einer Vielzahl von Fördervorrichtungen zu befördern, umfassend:
eine Bewegungsplan-Verwaltungseinheit (4), die konfiguriert ist, Bewegungsplan-Information der Vielzahl von Fördervorrichtungen zu verwalten;
eine Fördervorrichtung gemäß Anspruch 1, wobei die erste Kommunikationseinheit (11) konfiguriert ist, die Bewegungsplan-Information aus der Bewegungsplan-Verwaltungseinheit (4) zu empfangen;
eine Funktions-Steuereinheit (15), die konfiguriert ist, die Ausführung einer zugewiesenen Funktion auf Basis der Funktionszuweisungs-Information zu steuern.

3. Fördersystem (2) gemäß Anspruch 2, wobei zumindest eine der Vielzahl von Fördervorrichtungen (1) eine Bewegungsrouten-Erzeugungseinheit (18) erfasst, welche konfiguriert ist, eine Bewegungsroute der Vielzahl von Fördervorrichtungen (1) auf Basis der Fördervorrichtungs-Zustandsinformation und der Bewegungsplan-Information zu erzeugen.

4. Fördersystem (2) gemäß Anspruch 3, wobei
zumindest eine der Vielzahl von Fördervorrichtungen (1) die Funktionszuweisungseinheit (16) und die Bewegungsrouten-Erzeugungseinheit umfasst,
eine erste Fördervorrichtung der Vielzahl von Fördervorrichtungen (1) konfiguriert ist, sowohl die Funktionszuweisungseinheit (16) als auch die Bewegungsrouten-Erzeugungseinheit zu betreiben, und
die erste Fördervorrichtung konfiguriert ist, die durch andere Fördervorrichtungen (1) in der Vielzahl von Fördervorrichtungen (1) auszuführende Funktion und die Bewegungsroute über die zweite Kommunikationseinheit (14) an die anderen Fördervorrichtungen (1) zu senden.

5. Fördersystem (2) gemäß einem der Ansprüche 2 bis 4, wobei die Funktionszuweisungseinheit (16) konfiguriert ist, die durch die Vielzahl von Fördervorrichtungen (1) auszuführenden Funktionen auf Basis der Förderrichtungen der Vielzahl von Fördervorrichtungen (1) und einer Positionsbeziehung zwischen der Vielzahl von Fördervorrichtungen (1) zuzuweisen.

6. Fördersystem (2) gemäß einem der Ansprüche 2 bis 4, wobei die Funktionszuweisungseinheit (16) konfiguriert ist, durch die Vielzahl von Fördervorrichtungen (1) auszuführende Funktionen auf Basis einer an die Vielzahl von Fördervorrichtungen (1) angelegten Last zuzuweisen.

7. Fördersystem (2) gemäß einem der Ansprüche 2 bis 6, wobei
zumindest eine der Vielzahl von Fördervorrichtungen (1) eine Fahrzustands-Detektionseinheit umfasst, welche konfiguriert ist, einen Fahrzustand an der Front der Fördervorrichtung in einer Förderrichtung zu detektieren, und
die Funktionszuweisungseinheit (16) konfiguriert ist, durch die Vielzahl von Fördervorrichtungen (1) auszuführende Funktionen auf Basis des durch die Fahrzustands-Detektionseinheit detektierten Fahrzustands zuzuweisen.

8. Fördersystem (2) gemäß einem der Ansprüche 2 bis 7, wobei die Funktionszuweisungseinheit (16) konfiguriert ist, die Zuweisung der durch die Vielzahl von Fördervorrichtungen (1) auszuführenden Funktionen dadurch zu ändern, ob es ein Hindernis vorausliegend in der Förderrichtung gibt.

9. Fördersystem (2) gemäß einem der Ansprüche 2 bis 8, wobei die Funktionszuweisungseinheit (16) konfiguriert ist, die Zuweisung der durch die Vielzahl von Fördervorrichtungen (1) auszuführenden Funktionen zwischen einer Beschleunigungszeit und einer Verlangsamungszeit zu ändern.

10. Fördersystem (2) gemäß einem der Ansprüche 2 bis 9, wobei
zumindest eine der Vielzahl von Fördervorrichtungen (1) eine Umweltinformations-Erfassungseinheit (19) umfasst, welche konfiguriert ist, Umgebungsumwelt-Information zu erfassen, und
die Funktionszuweisungseinheit (16) konfiguriert ist, die durch die Vielzahl von Fördervorrichtungen (1) auszuführenden Funktionen auf Basis der durch die Umweltinformations-Erfassungseinheit (19) erfassten Umwelt-Information zuzuweisen.

11. Fördersystem (2) gemäß Anspruch 10, wobei
die Umweltinformations-Erfassungseinheit (19) einen Bildgebungssensor umfasst,
die Funktionszuweisungseinheit (16) konfiguriert ist, die Funktionszuweisungs-Information einschließlich Stopp-Betrieb des Bildgebungssensors der Fördervorrichtung zu erzeugen, in welchem die Förderkapazität niedriger als ein vorbestimmter Schwellenwert ist, und Betreiben des Bildgebungssensors der Fördervorrichtung, deren Förderkapazität auf dem vorbestimmten Schwellenwert oder höher ist.

12. Fördersystem (2) gemäß einem der Ansprüche 2 bis 11, wobei eine oder mehrere der Vielzahl von Fördervorrichtungen (1) eine Synchronisationsfahrt-Steuereinheit (21) umfasst, welche konfiguriert ist, Förderrichtungen auszurichten und synchronisiertes Befördern veranlasst.

13. Fördersystem (2) gemäß Anspruch 12, wobei, wenn die Funktionszuweisungseinheit (16) konfiguriert ist, Zuweisungsänderung der durch die Vielzahl von Fördervorrichtungen (1) auszuführenden Funktionen durchzuführen, die Synchronisationsfahrt-Steuereinheit konfiguriert ist, die Vielzahl von Fördervorrichtungen integral gemäß Positionen der Fördervorrichtungen (1), welche die Funktionen nach der Zuweisungsänderung ausführen, zu rotieren.

14. Förderverfahren des Beförderns eines Objektes mit einer Vielzahl von Fördervorrichtungen (1), wobei das Förderverfahren umfasst:
Verwalten von Bewegungsplan-Information der Vielzahl von Fördervorrichtungen (1); und
Empfangen, aus einem Server, der Bewegungsplan-Information durch zumindest eine der Vielzahl von Fördervorrichtungen (1), welche drahtlos mit dem Server über eine erste Kommunikationseinheit (11) kommunizieren;
wobei eine oder mehrere der Vielzahl von Fördervorrichtungen (1) konfiguriert ist:
Fördervorrichtungs-Zustandsinformation der Vielzahl von Fördervorrichtungen, einschließlich einer Position, einer Richtung, einer Fördergeschwindigkeit und einer Ausgabe, und/oder einer Restmenge einer Batterie, zu erfassen, und
die Fördervorrichtungs-Zusatzinformation, die Bewegungsplan-Information und Funktionszuweisungs-Information an und aus der anderen Fördervorrichtung der Vielzahl von Fördervorrichtungen (1) zu senden und zu empfangen,
wobei das Verfahren **gekennzeichnet ist dadurch**,
dass zumindest eine der Vielzahl von Fördervorrichtungen (1) die Zuweisung von **durch** die Vielzahl von Fördervorrichtungen (1) auszuführenden Funktionen durchführt, und weiter konfiguriert ist,
die Funktionszuweisungs-Information auf Basis der Förderkapazität einer oder mehrerer der Fördervorrichtungen (1) zu erzeugen, die auf Basis der Bewegungsplan-Information und der Fördervorrichtungs-Zustandsinformation der Vielzahl von Fördervorrichtungen (1) erfasst wird, und
die Zuweisung der **durch** die Vielzahl von Fördervorrichtungen auszuführenden Funktionen auf Basis einer Empfangs-Sensitivität in der ersten Kommunikationseinheit (11) durchzuführen, und einer Energieverbrauchsmenge pro Zeiteinheit der der einen oder mehreren der Vielzahl von Fördervorrichtungen (1) zuzuweisenden Funktion,
wobei die Funktionszuweisung das Auswählen einer der Vielzahl von Fördervorrichtungen umfasst, um die Funktion der Kommunikation mit dem Server durchzuführen.

## Revendications

1. Dispositif de transport (1), configuré pour transporter un objet avec une pluralité de dispositifs de transport (1) incluant le dispositif de transport et un ou plusieurs autres dispositifs de transport (1), le dispositif de transport comprenant :
une unité d'entraînement (12) ;
un dispositif d'acquisition d'informations d'état de dispositif de transport (13) configurée pour acquérir des informations d'état de dispositif de transport de la pluralité de dispositifs de transport incluant au moins une information parmi une position, une direction de transport, une vitesse de transport, et une production, et une quantité résiduelle d'une batterie (17) ;
une première unité de communication (11) configurée pour réaliser une communication sans fil avec un serveur et pour recevoir en provenance du serveur des informations de plan de déplacement de la pluralité de dispositifs de transport (1) ;
une deuxième unité de communication (14) configurée pour transmettre et recevoir les informations d'état de dispositif de transport, les informations de plan de déplacement, et des informations d'attribution de fonction, aux et en provenance des un ou plusieurs autres dispositifs de transport (1) ; le dispositif de transport étant **caractérisé par** :
une unité d'attribution de fonctions (16) configurée pour réaliser une attribution de fonctions à exécuter par la pluralité de dispositifs de transport (1),
et étant en outre configurée pour générer les informations d'attribution de fonctions sur la base d'une capacité de transport d'un ou de plusieurs des dispositifs de transport (1) qui sont acquises sur la base des informations de plan de déplacement et des informations d'état de dispositif de transport de la pluralité de dispositifs de transport (1),
et pour réaliser l'attribution des fonctions à exécuter par la pluralité de dispositifs de transport sur la base d'une sensibilité de réception dans la première unité de communication (11), et d'une quantité de consommation d'énergie par unité de temps de la fonction à attribuer à un ou plusieurs dispositifs parmi la pluralité de dispositifs de transport (1), l'unité d'attribution de fonctions étant configurée pour sélectionner un dispositif parmi la pluralité de dispositifs de transport pour réaliser la fonction de communication avec le serveur.

2. Système de transport (2) configuré pour transporter un objet avec une pluralité de dispositifs de transport, comprenant :
une unité de gestion de plan de déplacement (4) configurée pour gérer des informations de plan de déplacement de la pluralité de dispositifs de transport ;
un dispositif de transport selon la revendication 1, où la première unité de communication (11) est configurée pour recevoir les informations de plan de déplacement en provenance de l'unité de gestion de plan de déplacement (4) ;
une unité de commande de fonction (15) configurée pour commander l'exécution d'une fonction attribuée sur la base des informations d'attribution de fonctions.

3. Système de transport (2) selon la revendication 2, où au moins un dispositif parmi la pluralité de dispositifs de transport (1) comprend une unité de génération d'itinéraire de déplacement (18) configurée pour générer un itinéraire de déplacement de la pluralité de dispositifs de transport (1) sur la base des informations d'état de dispositif de transport et des informations de plan de déplacement.

4. Système de transport (2) selon la revendication 3, où
au moins un diapositif parmi la pluralité de dispositifs de transport (1) comprend l'unité d'attribution de fonctions (16) et l'unité de génération d'itinéraire de déplacement,
un premier dispositif de transport de la pluralité de dispositifs de transport (1) est configuré pour faire fonctionner à la fois l'unité d'attribution de fonctions (16) et l'unité de génération d'itinéraire de déplacement, et
le premier dispositif de transport étant configuré pour transmettre la fonction à exécuter par d'autres dispositifs de transport (1) dans la pluralité de dispositifs de transport (1), et l'itinéraire de déplacement, par l'intermédiaire de la deuxième unité de communication (14), aux autres dispositifs de transport (1).

5. Système de transport (2) selon l'une quelconque des revendications 2 à 4, où l'unité d'attribution de fonctions (16) est configurée pour attribuer les fonctions à exécuter par la pluralité de dispositifs de transport (1) sur la base de directions de transport de la pluralité de dispositifs de transport (1) et d'une relation de position entre la pluralité de dispositifs de transport (1).

6. Système de transport (2) selon l'une quelconque des revendications 2 à 4, où l'unité d'attribution de fonctions (16) est configurée pour attribuer des fonctions à exécuter par la pluralité de dispositifs de transport (1) sur la base d'une charge appliquée à la pluralité de dispositifs de transport (1).

7. Système de transport (2) selon l'une quelconque des revendications 2 à 6, où
au moins un dispositif parmi la pluralité de dispositifs de transport (1) comprend une unité de détection d'état de circulation qui est configurée pour détecter un état de circulation devant le dispositif de transport dans une direction de transport, et
l'unité d'attribution de fonctions (16) est configurée pour attribuer des fonctions à exécuter par la pluralité de dispositifs de transport (1) sur la base de l'état de circulation détecté par l'unité de détection d'état de circulation.

8. Système de transport (2) selon l'une quelconque des revendications 2 à 7, où l'unité d'attribution de fonctions (16) est configurée pour changer l'attribution des fonctions à exécuter par la pluralité de dispositifs de transport (1) en fonction de s'il existe un obstacle en avant dans la direction de transport.

9. Système de transport (2) selon l'une quelconque des revendications 2 à 8, où l'unité d'attribution de fonctions (16) est configurée pour changer l'attribution des fonctions à exécuter par la pluralité de dispositifs de transport (1) entre un temps d'accélération et un temps de décélération.

10. Système de transport (2) selon l'une quelconque des revendications 2 à 9, où
au moins un dispositif parmi la pluralité de dispositifs de transport (1) comprend une unité d'acquisition d'informations d'environnement (19) configurée pour acquérir des informations d'environnement ambiant, et
l'unité d'attribution de fonctions (16) est configurée pour attribuer les fonctions à exécuter par la pluralité de dispositifs de transport (1) sur la base des informations d'environnement acquises par l'unité d'acquisition d'informations d'environnement (19).

11. Système de transport (2) selon la revendication 10, où
l'unité d'acquisition d'informations d'environnement (19) comprend un capteur d'imagerie,
l'unité d'attribution de fonctions (16) est configurée pour générer les informations d'attribution de fonctions incluant l'arrêt du fonctionnement du capteur d'imagerie du dispositif de transport dans lequel la capacité de transport est inférieure à un seuil prédéterminé, et le fonctionnement du capteur d'imagerie du dispositif de transport dont la capacité de transport est le seuil prédéterminé ou plus.

12. Système de transport (2) selon l'une quelconque des revendications 2 à 11, où un ou plusieurs dispositifs parmi la pluralité de dispositifs de transport (1) comprend une unité de commande de circulation de synchronisation (21) configurée pour aligner des directions de transport et provoque un transport synchronisé.

13. Système de transport (2) selon la revendication 12, où, lorsque l'unité d'attribution de fonctions (16) est configurée pour réaliser un changement d'attribution des fonctions à exécuter par la pluralité de dispositifs de transport (1), l'unité de commande de circulation de synchronisation est configurée pour faire tourner la pluralité de dispositifs de transport (1) d'un seul tenant conformément à des positions des dispositifs de transport (1) qui exécutent les fonctions après le changement d'attribution.

14. Procédé de transport pour transporter un objet avec une pluralité de dispositifs de transport (1), le procédé de transport comprenant :
la gestion d'informations de plan de déplacement de la pluralité de dispositifs de transport (1) ; et
la réception, en provenance d'un serveur, d'informations de plan de déplacement par au moins un dispositif parmi la pluralité de dispositifs de transport (1) communiquant sans fil avec le serveur par l'intermédiaire d'une première unité de communication (11),
un ou plusieurs dispositifs parmi la pluralité de dispositifs de transport (1) étant configurés pour :
acquérir des informations d'état de dispositif de transport de la pluralité de dispositifs de transport incluant au moins une information parmi une position, une direction, une vitesse de transport, et une production, et une quantité résiduelle d'une batterie, et
transmettre et recevoir les informations d'état de dispositif de transport, les informations de plan de déplacement, et des informations d'attribution de fonctions à et en provenance de, l'autre dispositif de transport parmi la pluralité de dispositifs de transport (1),
le procédé étant **caractérisé par**
**le fait qu'**au moins un dispositif parmi la pluralité de dispositifs de transport (1) réalise une attribution de fonctions à exécuter par la pluralité de dispositifs de transport (1), et étant en outre configuré pour générer les informations d'attribution de fonctions sur la base d'une capacité de transport d'un ou de plusieurs des dispositifs de transport (1) qui sont acquises sur la base des informations de plan de déplacement et des informations d'état de dispositif de transport de la pluralité de dispositifs de transport (1), et
réaliser une attribution des fonctions à exécuter par la pluralité de dispositifs de transport sur la base d'une sensibilité de réception dans la première unité de communication et d'une quantité de consommation d'énergie par unité de temps de la fonction à attribuer à un ou plusieurs dispositifs parmi la pluralité de dispositifs de transport (1),
l'attribution de fonctions comprenant la sélection d'un dispositif parmi la pluralité de dispositifs de transport pour réaliser la fonction de communication avec le serveur.
